# EUROPÄISCHE PATENTSCHRIFT

(11) **EP 1 930 134 B1**
(45) Veröffentlichungstag und Bekanntmachung des Hinweises auf die Patenterteilung: **16.05.2012**
(21) Anmeldenummer: 07020156.1
(22) Anmeldetag: 15.10.2007
(51) Int. Cl.: B23D 51/10, B26B 5/00, B26B 9/02, B26B 11/00, B26B 1/10, B23D 51/03, B25F 1/04, A62B 3/00, B25G 3/18, B26B 29/02

(54) **Taschenwerkzeug, insbesondere Taschenmesser**
Pocket tool, in particular a pocket knife
Outil de poche, en particulier couteau de poche

(30) Priorität: 16.10.2006 AT 17222006; 17.10.2006 AT 17322006
(43) Veröffentlichungstag der Anmeldung: 11.06.2008
(60) Teilanmeldung: 10183104.8
(73) Patentinhaber: VICTORINOX AG, 6438 Ibach (CH)
(72) Erfinder: Elsener, Carl, 6438 Ibach (CH)
(74) Vertreter: Ofner, Clemens

(56) Entgegenhaltungen:
- EP-A- 1 000 713
- AT-A1- 500 097
- DE-A1- 3 528 105
- DE-C- 290 359
- US-A- 416 946
- US-A- 586 453
- US-A- 1 049 931
- US-A- 2 352 013
- US-A- 4 707 920
- US-A- 5 027 512

## Beschreibung

Die Erfindung betrifft ein Taschenwerkzeug, wie im Oberbegriff des Anspruches 1 beschrieben.

Aus der US 6,675,419 B2 ist ein Taschenwerkzeug bekannt, das über ein Drehgelenk miteinander verbundene Griffe mit über Achsen verbundenen Seitenwänden und zwischen diesen angeordneten Aufnahmebereichen, und über Schwenklagerungen auf den Achsen zwischen einer in den Aufnahmebereich eingeschwenkten Transportposition und einer aus dem Aufnahmebereich ausgeschwenkten Funktionsposition verstellbar gelagerte Funktionsteile auf weist. Einer dieser Funktionsteile ist durch eine Pinzette gebildet, die über eine Kupplungsvorrichtung auswechselbar auf einer Achse angeordnet und gegen ein Federelement gelagert ist. Die Kupplungsvorrichtung weist Führungsarme und eine zwischen diesen ausgebildete Aussparung zur Aufnahme der Achse auf. Zum Auswechseln der Pinzette wird diese um 180° aus der Transportposition in eine, der Funktionsposition entsprechende Entkupplungsposition ausgeschwenkt, in welcher die Pinzette relativ zur Achse parallel zur Längserstreckung des Griffes so weit in den Aufnahmebereich verschoben werden kann, bis einer der Führungsarme von der Achse entkuppelt ist. Anstatt der Pinzette kann auch eine Messerklinge oder ein Sägeblatt mit einer Kupplungsvorrichtung ausgestattet werden. Somit liegt beim Auswechselvorgang eines Funktionsteiles die scharfkantige Schneide frei, sodass ein erhöhtes Verletzungsrisiko für den Benutzer besteht. Andererseits kann durch die fehlende Seitenführung des Funktionsteiles in der Entkupplungsposition eine Beschädigung des Funktionsteiles bei fehlerhafter Bedingung nicht ausgeschlossen werden.

Aus der AT 500 097 A1 ist ein Taschenwerkzeug bekannt, bei dem ein Elektronikmodul über eine Kupplungsvorrichtung auswechselbar auf einer Achse gelagert ist, welche einen Lagerteil und einen Arretierarm aufweist, der gegen die Achse gelagert ist und die Achse im Lagerteil hält. Sowohl beim Entkuppeln als auch beim Ankuppeln wird das Elektronikmodul soweit gegenüber dem Gehäuse verschwenkt, dass eine Längsachse des Elektronikmoduls in einem Winkel von 90° zur Längsachse des Gehäuses gerichtet ist.

Die US 416,946 A, DE 290 359 C, US 586,453 A, US 19,606 A und US 1,049,931 A zeigen Taschenwerkzeuge, bei denen ein Funktionsteil über eine Kupplungsvorrichtung auswechselbar auf einer Achse des Gehäuses gelagert und über eine Schwenklagerung zwischen einer in das Gehäuse eingeschwenkten Transportposition und einer aus dem Gehäuse ausgeschwenkten Funktionsposition verstellbar ist.

Die DE 35 28 105 A1 offenbart ein Taschenwerkzeug mit einem Gehäuse, zumindest einem Aufnahmebereich, Achsen sowie einer auf einer der Achsen über eine Schwenklagerung zwischen einer in den Aufnahmebereich eingeschwenkten Transportposition und einer aus dem Aufnahmebereich ausgeschwenkten Funktionsposition verstellbaren Messerklinge, welche mit ihrer Schwenklagerung gegen ein Federelement gelagert und mit einem Verriegelungsmechanismus in ihrer Transport- und Funktionsposition arretierbar ist.

Schließlich sind in der US 5,027,512 A und US 2,352,013 A Schneidwerkzeug offenbart, welche einen Griff mit Griffnocken aufweisen, wodurch der Griff besser in der Hand legt

Der vorliegenden Erfindung liegt die Aufgabe zugrunde, ein Taschenwerkzeug zu schaffen, das ein Auswechseln eines Funktionsteiles auf einfache Weise und ohne wesentliches Verletzungsrisiko erlaubt.

Diese Aufgabe der Erfindung wird durch die Merkmale des Anspruches 1 gelöst. Von Vorteil ist, dass durch die Kulissenführung der Funktionsteil beim Auswechselvorgang, insbesondere Entkupplungsvorgang in einem derartigen Winkel zur Längsachse des Gehäuses bewegt wird, dass jener Spalt zwischen einer Funktionsfläche, insbesondere der Schneide eines Messers oder den Sägezähnen einer Säge, und der Außenkontur des Gehäuses kleiner ist als ein Fingerquerschnitt des Benutzers und selbst dann, wenn der Benutzer beim Auswechselvorgang versehentlich von der Oberkante des Funktionsteiles abrutscht, die Fingerspitzen an der "ungefährlichen" Seitenfläche des Funktionsteiles und am Gehäuse abgleiten können und nicht mit der Funktionsfläche in Berührung treten. Darüber hinaus wird beim Auswechselvorgang der Funktionsteil entlang des Aufnahmebereiches seitlich durch das Gehäuse selbst oder dem Gehäuse und einem weiteren Funktionsteil geführt, sodass auch bei höheren Entkupplungskräften eine Beschädigung des Funktionsteiles, beispielsweise eine Deformation, vermieden wird. Mittels der Griffnocken wird nicht nur die Ergonomie und Griffigkeit des Taschenwerkzeuges verbessert, sondern auch eine Schutzvorrichtung bereitgestellt, durch welche der Wirkbereich der Schneide bzw. Schneiden bereichsweise seitlich verdeckt ist, wenn der Funktionsteil in die Entkupplungsposition ausgeschwenkt ist.

Von Vorteil ist auch die Weiterbildung der Erfindung nach Anspruch 2, da durch die Führungsarme eine gabelartige Aufnahme ausgebildet ist, mit der besonders einfach ein Entkuppeln und Ankuppeln des Funktionsteiles von der Achse bzw. auf die Achse möglich ist.

Gemäß der Ausführung nach Anspruch 3 wird der Funktionsteil beim Auswechselvorgang, insbesondere Ankupplungsvorgang über die Kulissenbahn am zweiten Führungsarm relativ zur Achse innerhalb des Aufnahmebereiches kontrolliert bewegt und stets annähernd parallel zur Längsachse des Gehäuses gehalten. Dadurch wird ausgeschlossen, dass der Benutzer auch beim Ankupplungsvorgang mit der Funktionsfläche des Funktionsteiles in Kontakt gelangt und damit eine Verletzung an den Fingern des Benutzers ausgeschlossen werden kann.

Vorteilhaft ist aber auch die Ausgestaltung nach Anspruch 4, da auf den Funktionsteil sowohl in der Transportposition als auch in der Funktionsposition eine vom Federelement ausgeübte Haltekraft wirkt und dadurch sichergestellt werden kann, dass in beiden Endpositionen stets einer der Lagerteile an der Achse einrastet.

Mit der Ausgestaltung nach Anspruch 5 wird sichergestellt, dass in der Ankupplungsposition der Funktionsteil an der Achse schwenkbeweglich gehalten und gegen selbsttätiges Lösen gesichert ist. Dadurch kann der Verlust des auswechselbaren Funktionsteiles zuverlässig vermieden werden.

Eine zuverlässige Arretierung des Funktionsteiles in der Ankupplungsposition wird durch die vorteilhaften Ausgestaltungen gemäß den Ansprüchen 6 und 7 beschrieben.

Die Weiterbildung der Erfindung nach Anspruch 8 ist von Vorteil, da sowohl in der Transportposition als auch Funktionsposition ein Rastnocken am Federelement in entsprechende Rastvertiefungen am Funktionsteil einrastet und die Schwenklagerung mit einem seiner Führungsbahnteile gegen den Stütznocken anliegt, wodurch hohe Haltekräfte, insbesondere in der Funktionsposition bereitgestellt werden und auch bei der Benutzung des Funktionsteiles ein versehentliches Einklappen in die Transportposition zuverlässig vermieden wird.

Gemäß der Ausführung nach Anspruch 9 wird im Zusammenwirken mit der Führungskulisse am Federelement und den einzelnen Führungsbahnteilen eine saubere Aus- und Einschwenkbewegung des Funktionsteiles gegenüber dem Federelement bewirkt.

Gemäß der Ausgestaltung nach Anspruch 10 können hohe Schneidkräfte vom Funktionsteil aufgenommen werden.

Die Erfindung wird im Nachfolgenden anhand der in den Zeichnungen dargestellten Ausführungsbeispiele näher erläutert.

Es zeigen:
- Fig. 1: eine perspektivische Ansicht des erfindungsgemäßen Taschenwerkzeuges mit den in die Transportposition innerhalb der Aufnahmebereiche eingeschwenkten Funk- tionsteilen, in vereinfachter Darstellung;
- Fig. 2: das Taschenwerkzeug nach Fig. 1 mit den in die Funktionsposition außerhalb der Aufnahmebereiche ausgeschwenkten Funktionsteilen;
- Fig. 3: eine explosionsartige Darstellung des Taschenwerkzeuges nach Fig. 1;
- Fig. 4: einen in die Transportposition eingeschwenkten bzw. in der Ankupplungsposition befindlichen Funktionsteil und das mit diesem zusammenwirkende Federelement, in Seitenansicht;
- Fig. 5: das Federelement nach Fig. 4 in Seitenansicht;
- Fig. 6: der Funktionsteil nach Fig. 4 mit einer Detailansicht auf dessen Schwenklagerung und Kupplungsvorrichtung;
- Fig. 7: der Funktionsteil nach Fig. 4 in der bereichsweise aus dem Aufnahmebereich her- aus geschwenkten Entkupplungsposition und das Federelement in Seitenansicht;
- Fig. 8: den Entkupplungsvorgang des Funktionsteiles von der Achse;
- Fig. 9: einen in die Funktionsposition ausgeschwenkten Funktionsteil und das mit diesem zusammenwirkende Federelement, in Seitenansicht;
- Fig. 10 den: Ankupplungsvorgang des Funktionsteiles auf die Achse.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können.

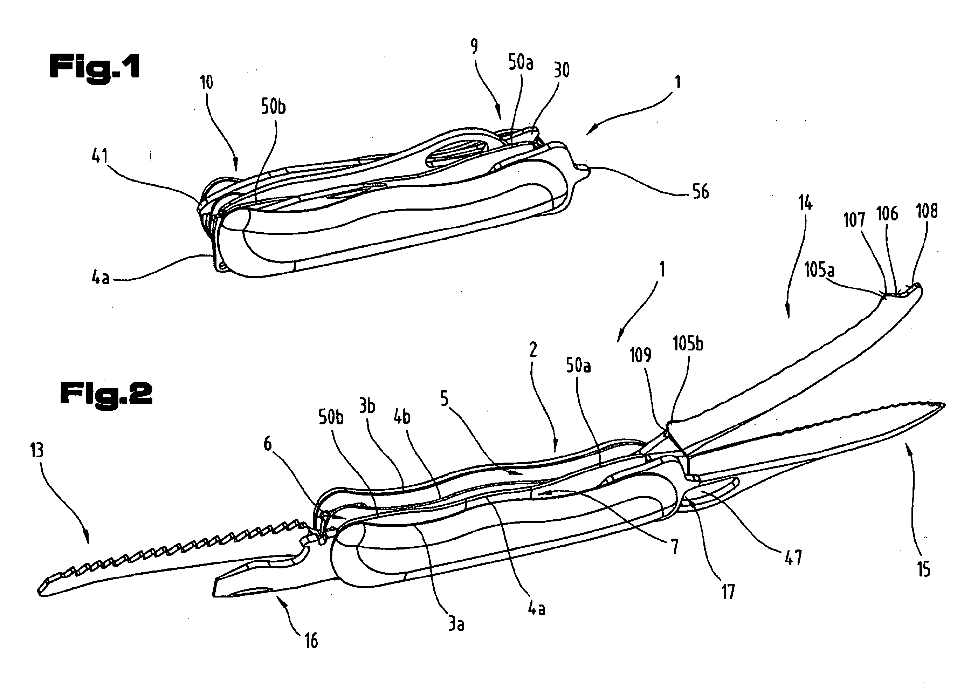

Die Fig. 1 bis 3 zeigen ein erfindungsgemäßes Taschenwerkzeug 1. Dieses ist gemäß dieser Ausführung durch ein Taschenmesser gebildet und umfasst ein Gehäuse 2, welches einander gegenüberliegende Seitenwände 3a, 3b, zwischen diesen angeordnete Trennwände 4a, 4b und durch diese in mehreren nebeneinander liegenden Ebenen zumindest bereichsweise begrenzte Aufnahmebereiche 5, 6, 7 aufweist. Die Seitenwände 3a, 3b sind auf ihrer Außenseiten jeweils mit einer Schale 8a, 8b bevorzugt aus Kunststoff abgedeckt. Die Seiten- und Trennwände 3a, 3b, 4a, 4b sind durch in Endbereichen 9, 10 des Gehäuses 2 angeordnete Achsen 11a, 11b und gegebenenfalls durch eine zwischen diesen angeordnete Achse 12 miteinander verbunden und bilden dazwischen die Aufnahmebereiche 5, 6, 7 aus.

Wie aus den Fig. ersichtlich, umfasst das Taschenwerkzeug 1 unterschiedliche Funktionsteile 13 bis 17, wovon die Funktionsteile 13 bis 16 jeweils eine Schwenklagerung 18 bis 21 aufweisen, über welche jeder Funktionsteil 13 bis 16 zwischen einer in den Aufnahmebereich 5, 6, 7 eingeschwenkten Transportposition, wie in Fig. 1 dargestellt, und einer aus dem Aufnahmebereich 5, 6, 7 ausgeschwenkten Funktionsposition, wie in Fig. 2 dargestellt, verstellbar und auf den Achsen 11a, 11b gelagert ist. Wie im Nachfolgenden noch detailliert beschrieben wird, sind die Funktionsteile 13, 17 jeweils über eine Kupplungsvorrichtung 22, 23 auswechselbar auf der Achse 11a, 11b gelagert. Damit verbunden ist der Vorteil, dass diese Funktionsteile 13, 17 einerseits durch Funktionsteile anderer Funktion oder nach Verschleißerscheinungen durch neue Funktionsteile ausgetauscht werden können.

Das in den Fig. dargestellte Taschenwerkzeug 1 dient vornehmlich zur Bergung von Menschen aus einem Kraftfahrzeug nach einem Unfall und sind dementsprechend die Funktionsteile 13 bis 17 zu diesem Zweck ausgebildet.

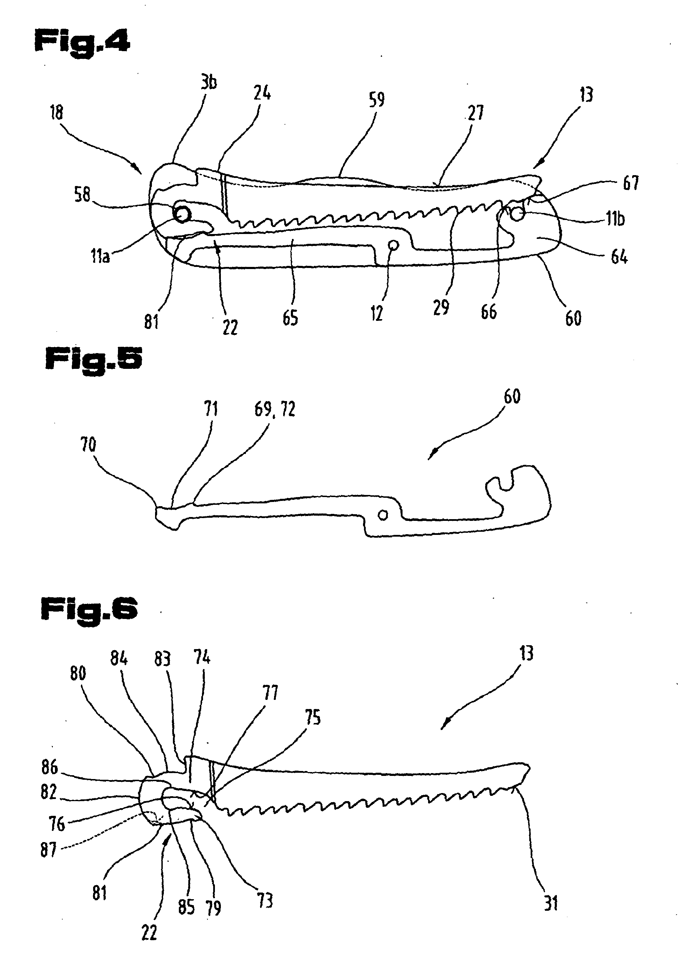

Der Funktionsteil 13 ist durch ein Trennwerkzeug gebildet und umfasst ein Sägeblatt 24, mit dem Verbundglas, beispielsweise eine Seitenscheibe des Kraftfahrzeuges geschnitten werden kann, um den Zugang zum Verletzten zu ermöglichen. Das Trennwerkzeug weist die Schwenklagerung 18, eine von dieser bis zu einer Spitze 25 erstreckende Unter- und Oberkante 26, 27 sowie sich zwischen diesen erstreckende Seitenflächen 28 auf und bildet an der Unterkante 26 eine Vielzahl von hintereinander angeordneten Schneiden 29 bzw. Sägezähne aus. Die Unter- und Oberkante 26, 27 verjüngen sich mit zunehmendem Abstand von der Schwenklagerung 18 in Richtung der Spitze 25 und zumindest die Oberkante 27 ist konkav ausgebildet. Das Sägeblatt 24 ist an seiner Spitze 25 mit einem in der eingeschwenkten Transportposition aus der Außenkontur des Gehäuses 2 herausragenden Griffelement 30 und mit einer in Fig. 6 eingetragenen Führungs- und Anschlagfläche 31 versehen. Letztere erstreckt sich an der Unterkante 26 zwischen der vordersten Schneide 29 und dem Griffelement 30. Die die Kupplungsvorrichtung 22 aufweisende Schwenklagerung 18 wird anhand der Fig. 4 bis 10 noch genauer beschrieben.

Der Funktionsteil 14 ist durch einen Gurtenschneider 35 zum Durchtrennen eines Sicherheitsgurtes gebildet, welcher die Schwenklagerung 19 und von dieser bis zu einer Spitze 36 annähernd parallel zueinander verlaufende Unter- und Oberkanten 37, 38 sowie sich zwischen diesen erstreckende kongruente Seitenflächen 39 aufweist. Im Übergangsbereich zwischen einer Seitenfläche 39 und der Unterkante 37 ist eine konkave Schneide 40 in Form eines Wellenschliffes ausgebildet. An der Spitze 36 ist wiederum ein in der Transportposition des Funktionsteiles 14 aus der Außenkontur des Gehäuses 2 herausragendes Griffelement 41 vorgesehen. Das Griffelement 41 ragt soweit aus der Außenkontur heraus, dass auch ein Verschwenken des Funktionsteiles 14 in die Funktionsposition mit einem anderen Körperteil als mit den Fingerspitzen, beispielsweise mit dem Knie möglich ist, womit eine Einhandbedienung beim Verschwenken des Funktionsteiles 14 in die Transportposition als auch Funktionsposition möglich ist. Zumindest die Oberkante 38 ist konvex ausgebildet, um sicherzustellen, dass der Gurtenschneider 35 ohne Verletzung der Person auch unterhalb eines straff angezogenen Sicherheitsgurtes eingeschoben werden kann. Nach gezeigter Ausführung ist auch die Unterkante 37 konkav ausgebildet.

Der Funktionsteil 14 umfasst außerdem einerseits zwischen der Spitze 36 und der Schneide 40 und andererseits zwischen der Schwenklagerung 19 und der Schneide 40 im Bereich der Unterkante 37 einen an der Schneide 40 vorragenden, vorderen Nocken 105a und einen an der Schneide 40 vorragenden, hinteren Nocken 105b. Der vordere Nocken 105a bildet eine von der Unterkante 37 in Richtung der Oberkante 38 geneigt verlaufende Abweiserfläche 106 und eine Führungsfläche 107 aus. Letztere schließt an die Schneide 40 an. Zwischen der Spitze 36 und dem Nocken 105a erstreckt sich eine Auflagefläche 108, wobei die Abweiserfläche 106 und Auflagefläche 108 einen Winkel zwischen 90° und 130°, beispielsweise 110°, einschließen und im Übergangsbereich zwischen der Abweiser- und Auflagefläche 106, 108 eine Verrundung beispielsweise mit einem Radius zwischen 2 mm und 6 mm ausgebildet ist. Die Auflagefläche 108 und eine Längsachse 68 vom Gehäuse 2 schließen einen Winkel zwischen 10° und 30°, beispielsweise 15°, ein, wenn der Funktionsteil 14 in seine Funktionsposition ausgeschwenkt ist.

Soll nun ein Gegenstand, insbesondere ein Sicherheitsgurt, durchschnitten werden, wird die Spitze 36 unterhalb des zu durchschneidender Gegenstandes eingeschoben und dabei der Gegenstand auf die Auflagefläche 108 geführt und danach über die Abweiserfläche 106 bis zur Führungsfläche 107 angehoben, von der er auf die Schneide 40 abgleitet und durchgeschnitten wird.

Somit erfüllt der vordere Nocken 105a eine Führungsfunktion für den Gegenstand, wenn dieser durchgeschnitten werden soll und kann beispielsweise auch ein straff angezogener Sicherheitsgurt durchgeschnitten werden, ohne der Person eine Verletzung hinzuzufügen.

Der hintere Nocken 105b bildet eine sich von der Unterkante 37 in Richtung der Oberkante 38 bevorzugt geneigt verlaufende Abstützfläche bzw. Grifffläche 109 aus, die den Benutzer des Taschenwerkzeuges 1 vor Verletzungen, insbesondere Schnittverletzungen schützt, wenn er beim Gebrauch des Funktionsteiles 14 versehentlich von dem als Heft dienenden Gehäuse 2 abrutscht. Ferner ermöglicht die Grifffläche 109 die Abstützung einer Fingerspitze beim Gebrauch des Funktionsteiles 14. Zudem dienen die stumpfen Nocken 105a, 105b als Schutz der zwischen diesen sich erstreckenden Schneide 40.

Der Funktionsteil 15 ist durch eine Messerklinge 42 (Trennwerkzeug) gebildet, welche die Schwenklagerung 20 und von dieser bis zu einer Spitze aufeinander zulaufende Unter- und Oberkanten 43, 44 sowie sich zwischen diesen erstreckende kongruente Seitenflächen 45 aufweist. Im Übergangsbereich zwischen einer Seitenfläche 45 und der Unterkante 43 ist eine Schneide 46 in Form eines Wellenschliffes ausgebildet. Die Messerklinge 42 ist an ihrer Oberkante 44 im Übergangsbereich zur Schwenklagerung 20 mit einer die Klingenkontur überragenden, augenartigen Grifföffnung 47 versehen. Die Grifföffnung 47 ist in den Abmessungen dergestalt ausgebildet, dass einerseits durch die besonders gute Griffigkeit die Messerklinge 42 alleinig mit dem Daumen aus der Transportposition in die Funktionsposition ausgeschwenkt werden kann oder umgekehrt und andererseits auch mit einem dicken Handschuh die Bedienung der Messerklinge 42 möglich ist. Auf diese Weise ist eine Einhandbedienung möglich.

Der Funktionsteil 16 weist die Schwenklagerung 21, einen Schraubendreher 48 und einen Kapselheber 49 auf.

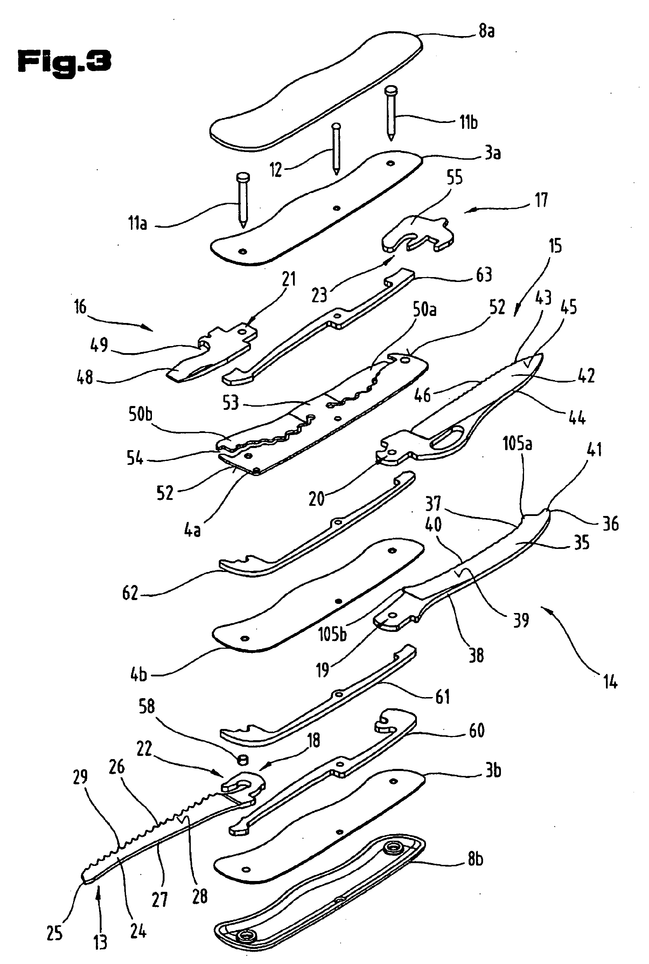

Wie aus den Fig. 1 und 3 ersichtlich, weist das Gehäuse 2 zusätzlich im Endbereich 9 eine der Schwenklagerung 20 der Messerklinge 42 zugeordnete Arretierzunge 50a zur Verriegelung und Entriegelung der Messerklinge 42 in der Funktionsposition und im Endbereich 10 eine der Schwenklagerung 18 des Sägeblattes 24 zugeordnete Arretierzunge 50b zur Verriegelung und Entriegelung des Sägeblattes 24 in der Funktionsposition auf.

Eine besonders kompakte Bauweise des Taschenwerkzeuges 1 wird erreicht, wenn die Arretierzungen 50a, 50b einstückig mit der zwischen dem Sägeblatt 24 und der Messerklinge 42 angeordneten Trennwand 4a durch Stanzen und Umformen hergestellt sind. Die Arretierzungen 50a, 50b sind aus der Ebene der Trennwand 4a in entgegen gesetzter Richtung abgewinkelt, sodass die Arretierzunge 50a, 50b selbsttätig aus der Entriegelungsstellung, siehe Fig. 1, in die Verriegelungsstellung, siehe Fig. 2, bewegt wird, wenn das Sägeblatt 24 oder die Messerklinge 42 in die Funktionsposition bewegt wurde. Wird eine Arretierzunge 50a, 50b aus der ausgelenkten Verriegelungsstellung entgegen der Wirkung der Federkraft in annähernd senkrechter Richtung auf die Trennwand 4a mit einer Entriegelungskraft beaufschlagt, wird diese in die Entriegelungsstellung seitlich neben das Sägeblatt 24 oder die Messerklinge 42 bewegt, worauf das Sägeblatt 24 oder die Messerklinge 42 aus der Funktionsposition in die Transportposition eingeschwenkt werden kann. Die Trennwand 4a weist hierzu von entgegen gesetzten Stirnseitenflächen 52 aufeinander zulaufende, durch einen Quersteg 53 an deren auslaufenden Enden mit Abstand angeordnete, wellenförmige Trennfugen 54 auf.

Der weitere Funktionsteil 17 ist durch einen über die Kupplungsvorrichtung 23 auswechselbar auf der Achse 11b angeordneten Scheibenzertrümmerer 55 bzw. ein Trennwerkzeug gebildet, der eine Körnerspitze 56 zum Einschlagen einer Glasscheibe aufweist.

Die oben beschriebenen Funktionsteile 13 bis 16 sind jeweils mit der Schwenklagerung 18 bis 21 gegen ein in den entsprechenden Aufnahmebereich 5, 6, 7 vorragendes Federelement 60 bis 63 gelagert und federbelastet aus der in Fig. 1 gezeigten Transportposition um 180° in die in Fig. 2 gezeigte Funktionsposition ausschwenkbar.

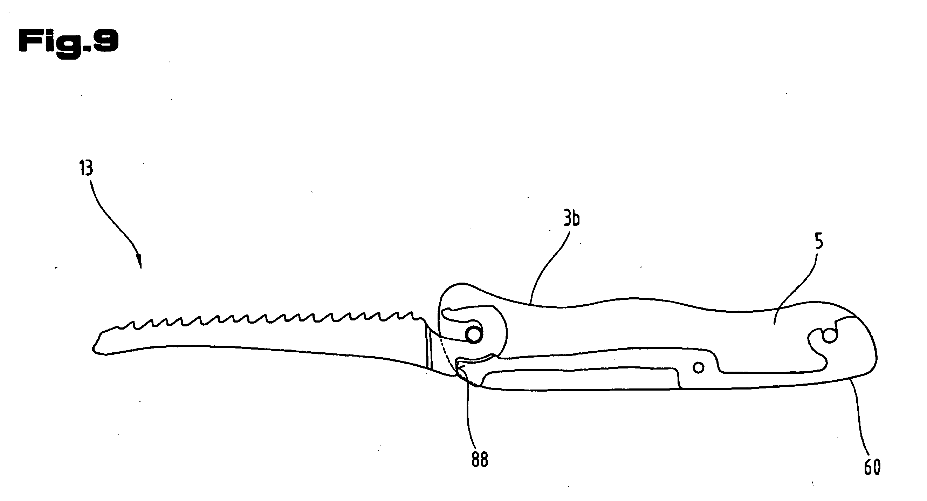

Die gemeinsam beschriebenen Fig. 4 bis 8 zeigen den Entkupplungsvorgang des Funktionsteiles 13 von der Achse 11a und Detailansichten auf den Funktionsteiles 13 und das Federelement 60. Das Trennwerkzeug ist mit seiner Schwenklagerung 18 gegen das Federelement 60 verschwenkbar gelagert, sodass sowohl in der eingeschwenkten Transportposition (Fig. 4) als auch in der ausgeschwenkten Funktionsposition (Fig. 9) eine Haltekraft wirkt. Um auch bei häufiger Anzahl an Wechselvorgängen eine Abnutzung an der Achse 11a zu vermeiden, kann auf dieser eine Lagerbuchse 58 angeordnet sein, an der das Trennwerkzeug mit seiner Schwenklagerung 18, insbesondere einem Lagerteil gelagert ist. Das Federelement 60 ist hebelgelagert und weist einen gegen die Achse 11b gelagerten Stützkörper 64 und einen an diesem vorspringenden und um die Achse 12 drehbar gelagerten, biegeelastischen Federarm 65 auf. Der Stützkörper 64 bildet an seiner dem eingeschwenkten Trennwerkzeug zugewandten Oberseite eine(n) zur Führungs- und Anschlagfläche 31 komplementäre(n) Führungsfläche 66 und Ruheanschlag 67 aus, die in einer Ebene liegen und mit einer Längsachse 68 des Gehäuses 2 einen Winkel von kleiner 30°, insbesondere zwischen 10° und 20° einschließen.

Wie in den Fig. dargestellt, sind die Seitenwände 3a, 3b jeweils an ihrer Oberseite mit aus der Außenkontur des in die Transportposition verstellten Funktionsteiles 13 herausragenden und um die Längsachse 68 symmetrisch angeordnete konvexe Griffnocken 59 versehen, deren Höhe und Breite so bemessen ist, dass in der Entkupplungsposition eine Teillänge der Unterkante 26 mit den Schneiden 29 von den Seitenwänden 3a, 3b seitlich überdeckt ist.

Das Federelement 60 bzw. der Federarm 65 ist an seinem freien Ende mit einem Rastnocken 69, Stütznocken 70 und einer sich zwischen diesen in Längsrichtung des Federelementes 60 erstreckenden, konkaven Führungskulisse 71 versehen, wie in Fig. 5 eingetragen. Der Rastnocken 69 bildet ein Rastelement 72 aus.

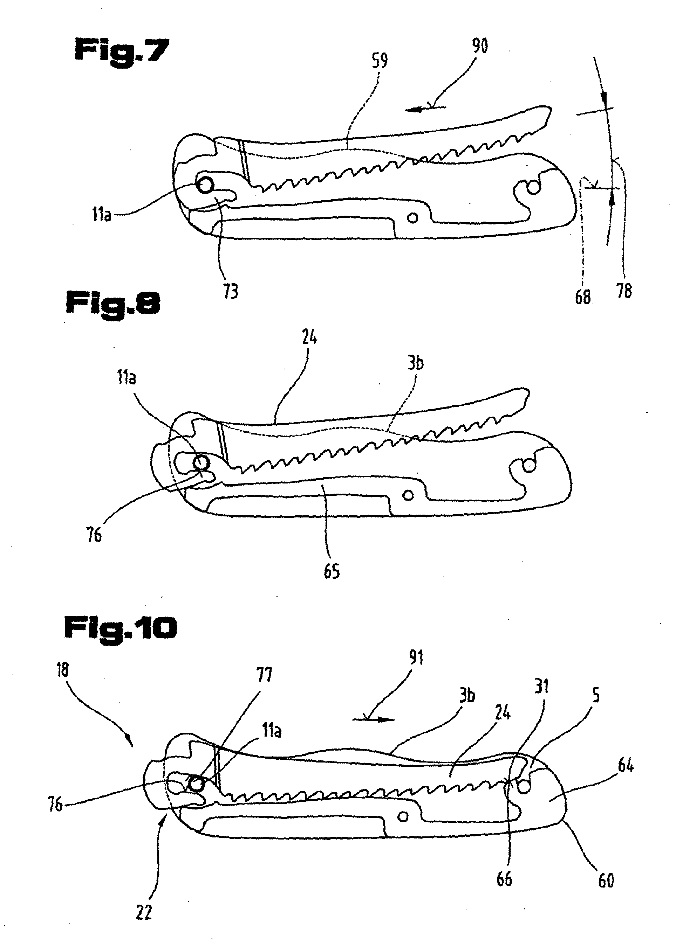

Wie in Fig. 6 gezeigt, weist die Kupplungsvorrichtung 22 Führungsarme 73, 74 und eine zwischen diesen ausgebildete Aussparung 75 zur Aufnahme der Achse 11a mit Lagerbuchse 58 auf. Die Führungsarme 73, 74 bilden auf deren einander zugewandten Seiten jeweils eine Kulissenbahn 76, 77 aus, wobei in der Transportposition des Trennwerkzeuges die ebene Kulissenbahn 76 mit der Längsachse 68 des Taschenwerkzeuges 1 einen derartigen Winkel einschließt, dass das Trennwerkzeug in seiner in Fig. 7 gezeigten Entkupplungsposition, welche zwischen der eingeschwenkten Transportposition und der ausgeschwenkten Funktionsposition liegt, geschwenkt ist und in einem Winkel 78 von kleiner 30°, insbesondere zwischen 7° und 15°, zur Längsachse 68 von der Achse 11a abgekuppelt werden kann, wie in den Fig. 7 und Fig. 8 dargestellt. Somit schließt eine Längsachse des Funktionsteiles 13 und die Kulissenbahn 76 einen Winkel von kleiner 30°, insbesondere zwischen 7° und 15°, ein, wenn der Funktionsteil 13 in die Transportposition geschwenkt ist.

Die plattenförmige Schwenklagerung 18 weist am Außenumfang in Schwenkrichtung etwa um 180° versetzt angeordnete Rastelemente 79, 80 auf, in die entweder in der Ankupplungsposition (Fig.4) oder in der Transport- und Funktionsposition des Sägeblattes 24 der am Federelement 60 angeordnete Rastnocken 69 einrastet. Dadurch werden die Haltekräfte sowohl in der Transportposition als auch in der Funktionsposition erheblich verbessert. Zwischen den Rastelemente 79, 80 erstrecken sich ein erster und zweiter Führungsbahnteil 81, 82, wobei der vom Führungsarm 73 abgewandte Führungsbahnteil 81 auf dem Stütznocken 70 ruht, wenn das Sägeblatt 24 in die Transport- bzw. Ankupplungsposition bewegt ist. Das Rastelement 79 ist durch eine im ersten Führungsbahnteil 81 angeordnete Rastvertiefung gebildet.

Die Schwenklagerung 18 weist ferner am Außenumfang in Schwenkrichtung eine Schulter 83, einen sich ausgehend vom Rastelement 80 bis zur Schulter 83 erstreckenden und vom Führungsarm 74 abgewandten, dritten Führungsbahnteil 84 sowie am Ende der Aussparung 75 übereinander angeordnete Lagerteile 85, 86 auf. Das Rastelement 80 ist durch eine im dritten Führungsbahnteil 84 angeordnete Rastvertiefung gebildet.

Wie in Fig. 6 in strichlierte Linien eingetragen, kann die Schwenklagerung 18 im Übergangsbereich zwischen den Führungsbahnteilen 81, 82 auch mit einer Abflachung 87 versehen werden, die annähernd planparallel zur ersten Kulissenbahn 76 verläuft und es ermöglicht, dass das Sägeblatt 24 in der Entkupplungsposition mit der Abflachung 87 gegen den Stütznocken 70 anliegt und im Winkel 78 relativ zum Gehäuse 2 gehalten wird.

In der Transport- bzw. Ankupplungsposition (Fig. 4) ruht das Sägeblatt 24 mit seinem ersten Führungsbahnteil 81 der Schwenklagerung 18 auf dem Stütznocken 71 an dem Federelement 60 und sind die Rastelemente 72, 79 des Federelementes 60 und der Schwenklagerung 18 miteinander eingerastet. Somit ergibt sich in Abhängigkeit von der Größe des Stütznockens 70 und der Federkraft eine entsprechende Haltekraft in der Transport- bzw. Ankupplungsposition. Wird nun das Sägeblatt 24 ergriffen und durch Kraftaufwand die Haltekraft überwunden, sodass der Rastnocken 69 aus der Rastvertiefung herausgehoben wird, läuft der Führungsbahnteil 82 am äußeren Ende der Schwenklagerung 18 durch die Führungskulisse 71. Diese Kulissenführung bewirkt eine saubere Ausschwenkbewegung des Sägeblattes 24 gegenüber dem Federelement 60. Schließlich gelangt das Rastelement 80 an der Schwenklagerung 18 zum Rastnocken 69 des Federelementes 60, wo dieses einrastet und das Sägeblatt 24 über die Schulter 83 gegen die Stirnseite 88 des Federelementes 60 anliegt. In dieser ausgeschwenkten Position ist die Funktionsposition (Fig. 9) erreicht, in welcher das Sägeblatt 24 mit entsprechender Haltekraft des Federelementes 60 arretiert ist und ein unbeabsichtigtes Rückklappen bei der Benutzung weitestgehend ausgeschlossen werden kann.

In der Entkupplungsposition (Fig. 7) verlaufen eine Führungsebene der ersten Kulissenbahn 76 und die Längsachse 68 annähernd parallel zueinander und sind die Rastelemente 72, 79 außer Eingriff gebracht, sodass das Sägeblatt 24 entgegen der Wirkung der Federkraft in Richtung einer Ausschubachse - gemäß Pfeil 90 - relativ zur Achse 11 a verschoben werden kann und die Achse 11a den Führungsarm 73 freigibt. In vorteilhafter Weise wird auf der Entkupplungsbewegung in Richtung der Ausschubachse 90 das Sägeblatt 24 einerseits mit seiner ersten Kulissenbahn 76 an der Achse 11a vertikal und andererseits durch das Gehäuse 2, insbesondere an der Seitenwand 3b und/oder das Federelement 60 und/oder an einer Seitenflächen 39 des Gurtenschneiders 35 seitlich geführt.

Fig. 10 zeigt den Ankupplungsvorgang des Sägeblattes 24 über die Kupplungsvorrichtung 22 an der Achse 11a. Ebenso wie der Entkupplungsvorgang kann auch der Ankupplungsvorgang unter höchsten Sicherheitsbestimmungen erfolgen. Beim Ankuppeln des Sägeblattes 24 wird dieses annähernd parallel zur Längsachse 68 des Gehäuses 2 gehalten und entlang des Aufnahmebereiches 5 in Richtung einer Einsschubachse - gemäß Pfeil 91 - relativ zur Achse 11a in die Ankupplungsposition verschoben, in welcher die Achse 11a am Lagerteil 85 und das Rastelement 79 am Rastnocken 69 (Rastelement 72) einrastet.

Auf der Ankupplungsbewegung des Sägeblattes 24 in die Ankupplungsposition wird die Führungsfläche 31 an der Führungsfläche 66 am Federelement 60 gleitend aufgesetzt und wird die Achse 11a entlang der bogenförmigen, zweiten Kulissenbahn 77 sowie die Schwenklagerung 18 entgegen der Federkraft vom Federelement 60 bis zu den Lagerteilen 85, 86 bewegt, wo durch die Federkraft die Schwenklagerung 18 mit seinem dem Federelement 60 benachbarten Lagerteil 85 an der Achse 11 a einrastet

Wie in den Fig. ersichtlich, ist sowohl in der Entkupplungsposition als auch Ankupplungsposition eine Öffnungsseite der Aussparung 75 dem Aufnahmebereich 5 zugewandt.

Abschließend sei noch drauf hingewiesen, dass auch der Gurtenschneider 35 oder die Messerklinge 42 mit einer Kupplungsvorrichtung versehen sein können.

Der Ordnung halber sei abschließend darauf hingewiesen, dass zum besseren Verständnis des Aufbaus des Taschenwerkzeuges 1, dieses bzw. dessen Bestandteile teilweise unmaßstäblich und/oder vergrößert und/oder verkleinert dargestellt wurden.

### Bezugszeichenaufstellung

- 1: Taschenwerkzeug
- 2: Gehäuse
- 3a: Seitenwand
- 3b: Seitenwand
- 4a: Trennwand
- 4b: Trennwand
- 5: Aufnahmebereich

- 6: Aufnahmebereich
- 7: Aufnahmebereich
- 8a: Schale
- 8b: Schale
- 9: Endbereich
- 10: Endbereich

- 11a: Achse
- 11b: Achse
- 12: Achse
- 13: Funktionsteil
- 14: Funktionsteil
- 15: Funktionsteil

- 16: Funktionsteil
- 17: Funktionsteil
- 18: Schwenklagerung
- 19: Schwenklagerung
- 20: Schwenklagerung

- 21: Schwenklagerung
- 22: Kupplungsvorrichtung
- 23: Kupplungsvorrichtung
- 24: Sägeblatt
- 25: Spitze

- 26: Unterkante
- 27: Oberkante
- 28: Seitenfläche
- 29: Schneide
- 30: Griffelement

- 31: Führungs- und Anschlagfläche
- 35: Gurtenschneider

- 36: Spitze
- 37: Unterkante
- 38: Oberkante
- 39: Seitenfläche
- 40: Schneide

- 41: Griffelement
- 42: Messerklinge
- 43: Unterkante
- 44: Oberkante
- 45: Seitenfläche

- 46: Schneide
- 47: Grifföffnung
- 48: Schraubendreher
- 49: Kapselheber
- 50a: Arretierzunge
- 50b: Arretierzunge

- 52: Stirnseitenfläche
- 53: Quersteg
- 54: Trennfuge
- 55: Scheibenzertrümmerer

- 56: Körnerspitze
- 58: Lagerbuchse
- 59: Griffnocke
- 60: Federelement

- 61: Federelement
- 62: Federelement
- 63: Federelement
- 64: Stützkörper
- 65: Federarm

- 66: Führungsfläche
- 67: Ruheanschlag
- 68: Längsachse
- 69: Rastnocken
- 70: Stütznocken

- 71: Führungskulisse
- 72: Rastelement
- 73: Führungsarm
- 74: Führungsarm
- 75: Aussparung

- 76: Kulissenbahn
- 77: Kulissenbahn
- 78: Winkel
- 79: Rastelement
- 80: Rastelement

- 81: Führungsbahnteil
- 82: Führungsbahnteil
- 83: Schulter
- 84: Führungsbahnteil
- 85: Lagerteil

- 86: Lagerteil
- 87: Abflachung
- 88: Stirnseite
- 90: Ausschubachse

- 91: Einschubachse
- 105: Nocken
- 106: Abweiserfläche
- 107: Führungsfläche
- 108: Auflagefläche

- 109: Grifffläche

## Patentansprüche

1. Taschenwerkzeug (1) mit einem Gehäuse (2), zumindest einem Aufnahmebereich (5, 6, 7), Achsen (11a, 11b) sowie zumindest einem auf einer der Achsen (11a, 11b) über eine Kupplungsvorrichtung (22) auswechselbar gelagerten und über eine Schwenklagerung (18, 19, 20) zwischen einer in den Aufnahmebereich (5, 6, 7) eingeschwenkten Transportposition und einer aus dem Aufnahmebereich (5, 6, 7) ausgeschwenkten Funktionsposition verstellbaren Funktionsteil (13, 14, 15), insbesondere ein Trennwerkzeug mit einer oder mehreren Schneiden (29, 40, 46), wie beispielsweise ein Sägeblatt (24) oder eine Messerklinge (42), welcher mit seiner Schwenklagerung (18, 19, 20) gegen ein Federelement (60, 61, 62) gelagert und in einer Entkupplungsposition relativ zur Achse (11a, 11b) bewegbar sowie vom Taschenwerkzeug (1) entfernbar ist, wobei die Entkupplungsposition zwischen der eingeschwenkten Transportposition und ausgeschwenkten Funktionsposition liegt und die Kupplungsvorrichtung (22) zumindest eine den Funktionsteil (13, 14, 15) auf seiner Entkupplungsbewegung entlang des Aufnahmebereiches (5, 6, 7) führende Kulissenbahn (76) aufweist, **dadurch gekennzeichnet, dass** die Kulissenbahn (76) eine Führungsebene ausbildet, die in der Entkupplungsposition des Funktionsteiles (13, 14, 15) annähernd parallel zur Längsachse (68) des Gehäuses (2) verläuft, und die ebene Kulissenbahn (76) den Funktionsteil (13, 14, 15) auf seiner Entkupplungsbewegung entlang des Aufnahmebereiches (5, 6, 7) in einem Winkel (78) von kleiner 30° zur Längsachse (68) des Gehäuses (2) führt, und wobei das Gehäuse (2) einander gegenüberliegende Seitenwände (3a, 3b) aufweist, die jeweils an ihrer Oberseite eine aus der Außenkontur des in die Transportposition verstellten Funktionsteiles (13, 14, 15) herausragende und um die Längsachse (68) des Gehäuses (2) symmetrisch angeordnete konvexe Griffnocken (59) aufweisen, deren Geometrie so bemessen ist, dass in der Entkupplungsposition, in welcher der Funktionsteil (13, 14, 15) von der Achse (11a, 11b) abgekuppelt werden kann, eine Teillänge des Funktionsteiles (13, 14, 15), insbesondere der Schneide(n) (29, 40, 46), im Aufnahmebereich (5, 6, 7) einliegt und von den Seitenwänden (3a, 3b) überdeckt ist.

2. Taschenwerkzeug nach Anspruch 1, **dadurch gekennzeichnet, dass** die Kupplungsvorrichtung (22) Führungsarme (73, 74) und eine zwischen diesen ausgebildete Aussparung (75) zur Aufnahme der Achse (11a, 11b) aufweist, wobei der erste Führungsarm (73) mit der ersten Kulissenbahn (76) versehen ist.

3. Taschenwerkzeug nach Anspruch 2, **dadurch gekennzeichnet, dass** der zweite Führungsarm (74) mit einer den Funktionsteil (13, 14, 15) in die Ankupplungsposition auf seiner Ankupplungsbewegung relativ zur Achse (11a, 11b) entlang des Aufnahmebereiches (5, 6, 7) bewegenden, zweiten Kulissenbahn (77) versehen ist, welche eine dem ersten Führungsarm (73) zugewandt, konkav verlaufende Führungsfläche ausbildet.

4. Taschenwerkzeug nach Anspruch 2, **dadurch gekennzeichnet, dass** die Schwenklagerung (18) die Kupplungsvorrichtung (22) und zu einer Längsachse der Aussparung (75) mit Abstand übereinander und in den Kulissenbahnen (76, 77) vertieft angeordnete Lagerteile (85, 86) aufweist und dass in der eingeschwenkten Transportposition die Kupplungsvorrichtung (22) über das Federelement (60, 61, 62) mit seinem ersten Lagerteil (85) gegen die Achse (11a, 11b) anliegt und in der ausgeschwenkten Funktionsposition die Kupplungsvorrichtung (22) über das Federelement (60, 61, 62) mit seinem zweiten Lagerteil (86) gegen die Achse (11a, 11b) anliegt.

5. Taschenwerkzeug nach Anspruch 1, **dadurch gekennzeichnet, dass** die Kupplungsvorrichtung (22) und das Federelement (60, 61, 62) in der Ankupplungsposition miteinander in Eingriff bringbare Rastelemente (72, 79) aufweisen.

6. Taschenwerkzeug nach Anspruch 5, **dadurch gekennzeichnet, dass** das Rastelement (79) der Kupplungsvorrichtung (22) durch eine im ersten Führungsarm (73) angeordnete Rastvertiefung gebildet ist.

7. Taschenwerkzeug nach Anspruch 5, **dadurch gekennzeichnet, dass** das Rastelement (72) des Federelementes (60, 61, 62) durch einen zur Rastvertiefung komplementären Rastnocken (69) gebildet ist.

8. Taschenwerkzeug nach Anspruch 5, **dadurch gekennzeichnet, dass** das Federelement (60, 61, 62) den Rastnocken (69) und einen Stütznocken (70) sowie eine sich zwischen diesen erstreckende, konkave Führungskulisse (71) ausbildet.

9. Taschenwerkzeug nach Anspruch 5, **dadurch gekennzeichnet, dass** die Schwenklagerung (18) in Schwenkrichtung hintereinander angeordnete Führungsbahnteile (81, 82, 84) aufweist.

10. Taschenwerkzeug nach Anspruch 1, **dadurch gekennzeichnet, dass** der Funktionsteil (13) im Bereich der Schwenklagerung (18) eine Schulter (83) aufweist, die in der ausgeschwenkten Funktionsposition gegen die Stirnseite (88) des Federelementes (60) anliegt.

## Claims

1. Pocket tool (1) comprising a housing (2), at least one compartment region (5, 6, 7), pins (11a, 11b) and at least one implement (13, 14, 15) interchangeably mounted on one of the pins (11a, 11b) by means of a coupling mechanism (22) and displaceable by means of a pivot bearing (18, 19, 20) between a transport position pivoted into the compartment region (5, 6, 7) and a functional position pivoted out of the compartment region (5, 6, 7), in particular a cutting tool with one or more blades (29, 40, 46), such as a saw blade (24) or a knife blade (42), which is mounted by means of its pivot bearing (18, 19, 20) against a spring element (60, 61, 62) and can be moved relative to the pin (11a, 11b) in an uncoupling position and removed from the pocket tool (1), which uncoupling position lies between the inwardly pivoted transport position and outwardly pivoted functional position, and the coupling mechanism (22) has at least one guide track (76) guiding the implement (13, 14, 15) along the compartment region (5, 6, 7) during its uncoupling movement, **characterised in that** the guide track (76) constitutes a guide plane extending approximately parallel with the longitudinal axis (68) of the housing (2) when the implement (13, 14, 15) is in the uncoupling position, and the flat guide track (76) guides the implement (13, 14, 15) along the compartment region (5, 6, 7) at an angle (78) of less than 30° with respect to the longitudinal axis (68) of the housing (2) during its uncoupling movement, and the housing (2) has oppositely lying side walls (3a, 3b) which respectively have on their top face a convex gripping cam (59) disposed symmetrically about the longitudinal axis (68) of the housing (2) and projecting out beyond the external contour of the implement (13, 14, 15) when moved into the transport position, the geometry of which is dimensioned so that in the uncoupling position in which the implement (13, 14, 15) can be released from the pin (11a, 11b), a partial length of the implement (13, 14, 15), in particular the blade(s) (29, 40, 46), lies within the compartment region (5, 6, 7) and is covered by the side walls (3a, 3b).

2. Pocket tool as claimed in claim 1, **characterised in that** the coupling mechanism (22) has guide arms (73, 74) and a recess (75) disposed between them for accommodating the pin (11a, 11b), and the first guide arm (73) is provided with the first guide track (76).

3. Pocket tool as claimed in claim 2, **characterised in that** the second guide arm (74) is provided with a second guide track (77) which moves the implement (13, 14, 15) during its coupling movement into the coupling position relative to the pin (11a, 11b) along the compartment region (5, 6, 7), which forms a concavely extending guide surface facing the first guide arm (73).

4. Pocket tool as claimed in claim 2, **characterised in that** the pivot bearing (18) comprises the coupling mechanism (22) and bearing parts (85, 86) disposed one above the other at a distance from a longitudinal axis of the recess (75) and recessed into the guide tracks (76, 77) and **in that** the coupling mechanism (22) sits with its first bearing part (85) against the pin (11a, 11b) by means of the spring element (60, 61, 62) in the pivoted-in transport position, and the coupling mechanism (22) sits with its second bearing part (86) against the pin (11a, 11b) by means of the spring element (60, 61, 62) in the pivoted-out functional position.

5. Pocket tool as claimed in claim 1, **characterised in that** the coupling mechanism (22) and the spring element (60, 61, 62) have catch elements (72, 79) which can be moved into engagement with one another in the coupling position.

6. Pocket tool as claimed in claim 5, **characterised in that** the catch element (79) of the coupling mechanism (22) is provided in the form of a catch recess disposed in the first guide arm (73).

7. Pocket tool as claimed in claim 5, **characterised in that** the catch element (72) of the spring element (60, 61, 62) is provided in the form of a catch cam (69) complementing the catch recess.

8. Pocket tool as claimed in claim 5, **characterised in that** the spring element (60, 61, 62) forms the catch cam (69) and a support cam (70) as well as a concave guide link (71) extending between them.

9. Pocket tool as claimed in claim 5, **characterised in that** the pivot bearing (18) has guide track parts (81, 82, 84) disposed one after the other in the pivoting direction.

10. Pocket tool as claimed in claim 1, **characterised in that** the implement (13) has a shoulder (83) in the region of the pivot bearing (18) which lies against the end face (88) of the spring element (60) in the outwardly pivoted functional position.

## Revendications

1. Outil de poche (1) avec un boîtier (2), au moins une zone de réception (5, 6, 7), des axes (11a, 11b) et au moins une partie fonctionnelle (13, 14, 15) logée d'une manière échangeable sur un des axes (11a, 11b) par un dispositif de couplage (22) et déplaçable par un palier de pivotement (18, 19, 20) entre une position de transport pivotée dans la zone de réception (5, 6, 7) et une position de fonctionnement pivotée hors de la zone de réception (5, 6, 7), en particulier un outil de séparation avec un ou plusieurs tranchants (29, 40, 46), comme par exemple une lame de scie (24) ou une lame de couteau (42) qui peut être logée avec son palier de pivotement (18, 19, 20) contre un élément de ressort (60, 61, 62) et est déplaçable dans une position de découplage relativement à l'axe (11a, 11b) et peut être éloigné de l'outil de poche (1), où la position de découplage se situe entre la position de transport pivotée vers l'intérieur et la position de fonctionnement pivotée vers l'extérieur, et le dispositif de couplage (22) présente au moins une voie de coulisse (76) guidant la partie fonctionnelle (13, 14, 15) lors de son mouvement de découplage le long de la zone de réception (5, 6, 7), **caractérisé en ce que** la voie de coulisse (76) forme un plan de guidage qui s'étend dans la position de découplage de la partie de fonctionnement (13, 14, 15) approximativement parallèlement à l'axe longitudinal (68) du boîtier (2), et la voie de coulisse plane (76) guide la partie de fonctionnement (13, 14, 15) sur son mouvement de découplage le long de la zone de réception (5, 6, 7) selon un angle (78) inférieur à 30° à l'axe longitudinal (68) du boîtier (2), et où le boîtier (2) présente des parois latérales opposées (3a, 3b) qui présentent chacune à leur côté supérieur un ergot de préhension convexe (59) faisant saillie du contour extérieur de la partie de fonctionnement (13, 14, 15) déplacée dans la position de transport et disposés symétriquement autour de l'axe longitudinal (68) du boîtier (2), dont la géométrie est dimensionnée de façon qu'en position de découplage, dans laquelle la partie de fonctionnement (13, 14, 15) peut être découplée de l'axe (11à 11b), une longueur partielle de la partie de fonctionnement (13, 14, 15), en particulier le ou les tranchants (29, 40, 46), se situent dans la zone de réception (5, 6, 7) et est recouverte par les parois latérales (3a, 3b).

2. Outil de poche selon la revendication 1, **caractérisé en ce que** le dispositif de couplage (22) présente des bras de guidage (73, 74) et un évidement (75) réalisé entre ceux-ci pour la réception de l'axe (11a, 11b), où le premier bras de guidage (73) est pourvu de la première voie de coulisse (76).

3. Outil de poche selon la revendication 2, **caractérisé en ce que** le deuxième bras de guidage (74) est pourvu d'une deuxième voie de coulisse (77) déplaçant la partie de fonctionnement (13, 14, 15) dans la position de couplage sur son mouvement de couplage relativement à l'axe (11a, 11b) le long de la zone de réception (5, 6, 7), qui forme une face de guidage convexe, orientée vers le premier bras de guidage (73).

4. Outil de poche selon la revendication 2, **caractérisé en ce que** le palier de pivotement (18) présente le dispositif de couplage (22) et des parties de palier (85, 86) disposées relativement à un axe longitudinal de l'évidement (75) avec un espacement l'une sur l'autre et noyées dans les voies de coulisse (76, 77), et **en ce qu'**en position de transport pivoté vers l'intérieur, le dispositif de couplage (22) s'applique par l'élément de ressort (60, 61, 62) avec sa première partie de palier (85) à l'axe (11a, 11b) et, dans la position de fonctionnement pivoté vers l'extérieur, le dispositif de couplage (22) s'applique par l'élément de ressort (60, 61, 62) avec sa deuxième partie de palier (86) à l'axe (11a, 11b).

5. Outil de poche selon la revendication 1, **caractérisé en ce que** le dispositif de couplage (22) et l'élément de ressort (60, 61, 62) présentent dans la position de couplage des éléments d'enclenchement (72, 79) pouvant être amenés en prise.

6. Outil de poche selon la revendication 5, **caractérisé en ce que** l'élément d'enclenchement (79) du dispositif de couplage (22) est formé par un creux d'enclenchement disposé dans le premier bras de guidage (73).

7. Outil de poche selon la revendication 5, **caractérisé en ce que** l'élément d'enclenchement (72) de l'élément de ressort (60, 61, 62) est formé par un ergot d'enclenchement (69) complémentaire au creux d'enclenchement.

8. Outil de poche selon la revendication 5, **caractérisé en ce que** l'élément de ressort (60, 61, 62) réalise l'ergot d'enclenchement (69) et un ergot d'appui (70) ainsi qu'une coulisse de guidage concave (71) s'étendant entre ceux-ci.

9. Outil de poche selon la revendication 5, **caractérisé en ce que** le palier de pivotement (18) présente des parties de voie de guidage (81, 82, 84) disposées les unes à la suite des autres dans la direction de pivotement.

10. Outil de poche selon la revendication 1, **caractérisé en ce que** la partie de fonctionnement (13) présente dans la zone du palier de pivotement (18) un épaulement (83) qui s'applique dans la position de fonctionnement pivotée vers l'extérieur contre le côté frontal (88) de l'élément de ressort (60).
